# EUROPEAN PATENT APPLICATION

(11) **EP 3 110 218 A1**
(43) Date of publication of application: **28.12.2016**
(21) Application number: 14886543.9
(22) Date of filing: 21.03.2014
(51) Int. Cl.: H04W 72/04

(54) **METHOD FOR TRANSMITTING DATA INFORMATION, BASE STATION AND USER EQUIPMENT**

(71) Applicant: Huawei Technologies Co., Ltd, Shenzhen, Guangdong 518129 (CN)
(72) Inventor: FAN, Shuju, Guangdong 518129 (CN); WANG, Fan, Guangdong 518129 (CN); MA, Xueli, Guangdong 518129 (CN); TIE, Xiaolei, Guangdong 518129 (CN)
(74) Representative: Goddar, Heinz J.
(86) International application number: PCT/CN2014/073899
(87) International publication number: WO 2015/139321

(57) **Abstract**

Embodiments of the present invention relate to the communications field, and provide a method for transmitting data information, a base station, and user equipment, to improve utilization efficiency of a control message. The method includes: determining, by a base station, a carrier for sending data information, determining carrier indication information, and sending a control message corresponding to the data information to user equipment according to the carrier indication information, so that the user equipment receives the data information according to the control message. The method is used to transmit data information.

## Description

### TECHNICAL FIELD

The present invention relates to the communications field, and in particular, to a method for transmitting data information, a base station, and user equipment.

### BACKGROUND

The UMTS (Universal Mobile Telecommunications System, Universal Mobile Telecommunications System) is one of the global 3G standards formulated by the 3rd Generation Partnership Project 3GPP (3rd Generation Partnership Project, 3rd Generation Partnership Project). An HSDPA (High Speed Downlink Packet Access, high-speed downlink packet access) technology is introduced to Release-5 of the UMTS to improve a downlink data transmission rate, and reduce a user data transmission delay. Channels involved in the HSDPA include a downlink HS-PDSCH (High-Speed Physical Downlink Shared Channel, high-speed physical downlink shared channel), and a corresponding downlink HS-SCCH (High-Speed Shared Control Channel, downlink high-speed shared control channel) and a corresponding uplink HS-DPCCH (Uplink High-Speed Dedicated Physical Control Channel, uplink high-speed dedicated physical control channel). A base station sends data information to user equipment by using an HS-PDSCH of a physical layer, and sends, by using an HS-SCCH, a control message related to the HS-PDSCH. After receiving the HS-SCCH, the user equipment demodulates and decodes the HS-PDSCH by using the control message carried over the HS-SCCH, to obtain the data information.

It is found that in the prior art, in a scenario of one 5 MHz carrier and one small-bandwidth carrier (2.5 MHz or 1.25 MHz), when either carrier of the carriers transmits data information, a control message is inefficiently utilized, causing a waste of resources.

### SUMMARY

Embodiments of the present invention provide a method for transmitting data information, a base station, and user equipment, to improve utilization efficiency of a control message.

To achieve the foregoing objective, the following technical solutions are used in the embodiments of the present invention:

According to a first aspect, a base station is provided, including:
a processing unit, configured to determine a carrier for sending data information, determine carrier indication information, and determine, according to the carrier indication information, a control message corresponding to the data information, where the carrier includes two subcarriers, and the carrier indication information indicates that the data information corresponding to the control message is sent on the two subcarriers; and
a sending unit, configured to send the control message determined by the processing unit to user equipment, so that the user equipment receives the data information according to the control message.

With reference to the first aspect, in a first possible implementation manner of the first aspect, the control message includes the carrier indication information; and
the sending unit is further configured to send the control message that includes the carrier indication information to the user equipment.

With reference to the first aspect, in a second possible implementation manner of the first aspect, the control message includes a modulation method and a quantity of transport blocks;
the processing unit is further configured to determine the modulation method and the quantity of transport blocks according to the carrier indication information; and
the sending unit is specifically configured to send the control message that includes the modulation method and the quantity of transport blocks to the user equipment.

With reference to the first aspect, in a third possible implementation manner of the first aspect, the processing unit is further configured to determine, according to the carrier indication information, a code channel number for sending the control message; and
the sending unit is specifically configured to send the control message to the user equipment by using the code channel number.

With reference to the third possible implementation manner of the first aspect, in fourth possible implementation manner of the first aspect, the processing unit is further configured to determine a data channel code set in the control message according to the carrier indication information; and
the sending unit is further configured to send, by using the code channel number, the control message that includes the data channel code set to the user equipment.

With reference to the first aspect, in a fifth possible implementation manner of the first aspect, the base station further includes: an acquiring unit, configured to acquire identity information of the user equipment;
the processing unit is further configured to determine a mask according to the identity information of the user equipment obtained by the acquiring unit and the carrier indication information, and mask the control message by using the mask; and
the sending unit is specifically configured to send the control message masked by using the mask to the user equipment.

With reference to any one of the first aspect to the fifth possible implementation manner of the first aspect, in a sixth possible implementation manner of the first aspect, the two subcarriers include a first subcarrier and a second subcarrier; and
the processing unit is specifically configured to: when it is determined that the carrier for sending the data information is the first carrier and the second carrier, determine that the carrier indication information is a first preset value.

With reference to the sixth possible implementation manner of the first aspect, in a seventh possible implementation manner of the first aspect, the control message includes a first processing manner and a second processing manner; and
the processing unit is specifically configured to: when it is determined that a processing manner corresponding to the first carrier is the first processing manner and a processing manner corresponding to the second carrier is the second processing manner, determine that the carrier indication information is the first preset value.

With reference to the seventh possible implementation manner of the first aspect, in an eighth possible implementation manner of the first aspect, the processing unit is further configured to: when it is determined that the processing manner corresponding to the first carrier is the second processing manner and the processing manner corresponding to the second carrier is the first processing manner, determine that the carrier indication information is a second preset value.

With reference to the eighth possible implementation manner of the first aspect, in a ninth possible implementation manner of the first aspect, the first preset value is 2, and the second preset value is 3.

According to a second aspect, user equipment is provided, including:
a receiving unit, configured to: after a base station sends a control message corresponding to data information to the user equipment according to carrier indication information, acquire the control message, where the data information is transmitted by using two subcarriers; and
a processing unit, configured to acquire the carrier indication information according to the control message received by the receiving unit, and when it is determined, according to the carrier indication information, that the data information is carried on the two subcarriers, perform data processing on the two subcarriers according to the control message, to acquire the data information, where the carrier indication information indicates a subcarrier on which the data information corresponding to the control message is located.

With reference to the second aspect, in a first possible implementation manner of the second aspect, the control message includes the carrier indication information; and
the processing unit is specifically configured to acquire the carrier indication information in the control message.

With reference to the second aspect, in a second possible implementation manner of the second aspect, the control message includes a modulation method and a quantity of transport blocks; and
the processing unit is specifically configured to acquire the modulation method and the quantity of transport blocks according to the control message, and determine the carrier indication information according to the modulation method and the quantity of transport blocks.

With reference to the second aspect, in a third possible implementation manner of the second aspect, the processing unit is specifically configured to determine a code channel number corresponding to the control message received by the receiving unit, and determine the carrier indication information according to the code channel number.

With reference to the third possible implementation manner of the second aspect, in a fourth possible implementation manner of the second aspect, the processing unit is further configured to: before the carrier indication information is determined according to the code channel number, determine a data channel code set according to the control message, and determine the carrier indication information according to the code channel number and the data channel code set.

With reference to the second aspect, in a fifth possible implementation manner of the second aspect, the user equipment further includes: an acquiring unit, configured to: before the control message is acquired according to the carrier, acquire identity information of the user equipment;
the processing unit is further configured to determine preset carrier indication information, and obtain a mask according to the identity information obtained by the acquiring unit and the preset carrier indication information;
the acquiring unit is further configured to detect the control message on the carrier by using the mask obtained by the processing unit; and
the processing unit is further configured to determine that a first mask of the control message is detected on the carrier, determine first preset carrier indication information corresponding to the first mask, and determine that the first preset carrier indication information is the carrier indication information.

With reference to any one of the second aspect to the fifth possible implementation manner of the second aspect, in a sixth possible implementation manner of the second aspect, the two subcarriers include a first subcarrier and a second subcarrier; and
the processing unit is further configured to: when it is determined that the carrier indication information is a first preset value, determine that the data information is carried on the first subcarrier and the second subcarrier, and perform data processing on the first subcarrier and the second subcarrier according to the control message.

With reference to the sixth possible implementation manner of the second aspect, in a seventh possible implementation manner of the second aspect, the control message includes a first processing manner and a second processing manner; and
the processing unit is specifically configured to determine the first processing manner according to the control message, and perform data processing on the first subcarrier according to the first processing manner; determine the second processing manner according to the control message, and perform data processing on the second subcarrier according to the second processing manner.

With reference to the seventh possible implementation manner of the second aspect, in an eighth possible implementation manner of the second aspect, the processing unit is further configured to: when it is determined that the carrier indication information is a second preset value, determine that the data information is carried on the first subcarrier and the second subcarrier, perform data processing on the first carrier according to the second processing manner, and perform data processing on the second carrier according to the first processing manner.

With reference to the eighth possible implementation manner of the second aspect, in a ninth possible implementation manner of the second aspect, the first preset value is 2, and the second preset value is 3.

According to a third aspect, a method for sending data information is provided, including:
determining, by a base station, a carrier for sending data information, and determining carrier indication information, where the carrier includes two subcarriers, and the carrier indication information indicates that the data information corresponding to a control message is sent on the two subcarriers; and
sending the control message corresponding to the data information to the user equipment according to the carrier indication information, so that the user equipment receives the data information according to the control message.

With reference to the third aspect, in a first possible implementation manner of the third aspect, the control message includes the carrier indication information; and
the sending the control message corresponding to the data information to the user equipment according to the carrier indication information includes:
sending the control message that includes the carrier indication information to the user equipment.

With reference to the third aspect, in a second possible implementation manner of the third aspect, the control message includes a modulation method and a quantity of transport blocks;
before the sending the control message corresponding to the data information to the user equipment according to the carrier indication information, the method further includes:
determining the modulation method and the quantity of transport blocks according to the carrier indication information; and
the sending the control message corresponding to the data information to the user equipment according to the carrier indication information includes:
sending the control message that includes the modulation method and the quantity of transport blocks to the user equipment.

With reference to the third aspect, in a third possible implementation manner of the third aspect, before the sending the control message corresponding to the data information to the user equipment according to the carrier indication information, the method further includes:
determining, according to the carrier indication information, a code channel number for sending the control message; and
the sending the control message corresponding to the data information to the user equipment according to the carrier indication information includes:
sending the control message to the user equipment by using the code channel number.

With reference to the third possible implementation manner of the third aspect, in a fourth possible implementation manner of the third aspect, before the sending the control message corresponding to the data information to the user equipment according to the carrier indication information, the method further includes:
determining a data channel code set in the control message according to the carrier indication information; and
the sending the control message to the user equipment by using the code channel number includes:
sending, by using the code channel number, the control message that includes the data channel code set to the user equipment.

With reference to the third aspect, in a fifth possible implementation manner of the third aspect, before the sending the control message corresponding to the data information to the user equipment, the method further includes:
acquiring identity information of the user equipment, determining a mask according to the identity information of the user equipment and the carrier indication information, and masking the control message by using the mask; and
the sending the control message corresponding to the data information to the user equipment according to the carrier indication information includes:
sending the control message masked by using the mask to the user equipment.

With reference to any one of the third aspect to the fifth possible implementation manner of the third aspect, in a sixth possible implementation manner of the third aspect, the two subcarriers include a first subcarrier and a second subcarrier; and
the determining carrier indication information includes:
determining that the carrier indication information is a first preset value when it is determined that the carrier for sending the data information is the first carrier and the second carrier.

With reference to the sixth possible implementation manner of the third aspect, in a seventh possible implementation manner of the third aspect, the control message includes a first processing manner and a second processing manner; and
the determining that the carrier indication information is a first preset value when it is determined that the carrier for sending the data information is the first carrier and the second carrier includes:
when it is determined that a processing manner corresponding to the first carrier is the first processing manner and a processing manner corresponding to the second carrier is the second processing manner, determining that the carrier indication information is the first preset value.

With reference to the seventh possible implementation manner of the third aspect, in an eighth possible implementation manner of the third aspect, the determining the carrier indication information includes:
when it is determined that the processing manner corresponding to the first carrier is the second processing manner and the processing manner corresponding to the second carrier is the first processing manner, determining that the carrier indication information is a second preset value.

With reference to the eighth possible implementation manner of the third aspect, in a ninth possible implementation manner of the third aspect, the first preset value is 2, and the second preset value is 3.

According to a fourth aspect, a method for receiving data information is provided, including:
after a base station sends a control message corresponding to data information to user equipment according to carrier indication information, acquiring, by the user equipment, the control message, where the data information is transmitted by using two subcarriers;
acquiring the carrier indication information according to the control message, where the carrier indication information indicates a subcarrier on which the data information corresponding to the control message is located; and
performing data processing on the two sub carriers according to the control message, to acquire the data information when it is determined, according to the carrier indication information, that the data information is carried on the two subcarriers.

With reference to the fourth aspect, in a first possible implementation manner of the fourth aspect, the control message includes the carrier indication information; and
the acquiring the carrier indication information according to the control message includes:
acquiring the carrier indication information in the control message.

With reference to the fourth aspect, in a second possible implementation manner of the fourth aspect, the control message includes a modulation method and a quantity of transport blocks; and
the acquiring the carrier indication information according to the control information includes:
acquiring the modulation method and the quantity of transport blocks according to the control message, and determining the carrier indication information according to the modulation method and the quantity of transport blocks.

With reference to the fourth aspect, in a third possible implementation manner of the fourth aspect, the acquiring carrier indication information according to the control information includes:
determining a code channel number corresponding to the received control message, and determining the carrier indication information according to the code channel number.

With reference to the third possible implementation manner of the fourth aspect, in a fourth possible implementation manner of the fourth aspect, before the determining the carrier indication information according to the code channel number, the method further includes:
determining a data channel code set according to the control message; and
the determining the carrier indication information according to the code channel number includes:
determining the carrier indication information according to the code channel number and the data channel code set.

With reference to the fourth aspect, in a fifth possible implementation manner of the fourth aspect, before the acquiring a control message according to the carrier, the method further includes:
acquiring identity information of the user equipment, determining preset carrier indication information, obtaining a mask according to the identity information and the preset carrier indication information, and detecting the control message on the carrier by using the mask; and
the acquiring the carrier indication information according to the control information includes:
determining that a first mask of the control message is detected on the carrier, determining first preset carrier indication information corresponding to the first mask, and determining that the first preset carrier indication information is the carrier indication information.

With reference to the fourth aspect to the fifth possible implementation manner of the fourth aspect, in a sixth possible implementation manner of the fourth aspect, the two subcarriers include a first subcarrier and a second subcarrier; and
the performing data processing on the two subcarriers according to the control message when it is determined, according to the carrier indication information, that the data information is carried on the two subcarriers includes:
when it is determined that the carrier indication information is a first preset value, determining that the data information is carried on the first subcarrier and the second subcarrier, and performing data processing on the first subcarrier and the second subcarrier according to the control message.

With reference to the sixth possible implementation manner of the fourth aspect, in a seventh possible implementation manner of the fourth aspect, the control message includes a first processing manner and a second processing manner; and
the performing data processing on the first subcarrier and the second subcarrier according to the control message includes:
determining the first processing manner according to the control message, and performing data processing on the first subcarrier according to the first processing manner; and
determining the second processing manner according to the control message, and performing data processing on the second subcarrier according to the second processing manner.

With reference to the seventh possible implementation manner of the fourth aspect, in an eighth possible implementation manner of the fourth aspect, the performing data processing on the two subcarriers according to the control message when it is determined, according to the carrier indication information, that the data information is carried on the two subcarriers includes:
when it is determined that the carrier indication information is a second preset value, determining that the data information is carried on the first subcarrier and the second subcarrier, performing data processing on the first carrier according to the second processing manner, and performing data processing on the second carrier according to the first processing manner.

With reference to the eighth possible implementation manner of the fourth aspect, in a ninth possible implementation manner of the fourth aspect, the first preset value is 2, and the second preset value is 3.

According to a fifth aspect, a base station is provided, including: a processor and a memory, where the memory stores a computer execution instruction, and the processor and the memory are connected by using a communications bus; and
when the base station runs, the processor executes the computer execution instruction stored in the memory, so that the base station executes the method according to the third aspect.

According to a sixth aspect, user equipment is provided, including: a processor and a memory, where the memory stores a computer execution instruction, and the processor and the memory are connected by using a communications bus; and
when the user equipment runs, the processor executes the computer execution instruction stored in the memory, so that the user equipment executes the method of the fourth aspect.

By using the foregoing solutions, a base station determines a carrier for sending data information, determines carrier indication information, and sends a control message corresponding to the data information to user equipment according to the carrier indication information, so that the user equipment receives the data information according to the control message. In this way, the control message corresponds to two subcarriers, and the user equipment may determine, according to the control message sent by the base station, the data information corresponding to the control message, and may control data transmission on the two subcarriers according to one control message, thereby improving utilization efficiency of the control message.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention and a person of ordinary skill in the art may still derive other drawings from these accompanying drawings without creative efforts.
FIG. 1 is a schematic structural diagram of a base station according to an embodiment of the present invention;
FIG. 2 is a schematic structural diagram of another base station according to an embodiment of the present invention;
FIG. 3 is a schematic structural diagram of user equipment according to an embodiment of the present invention;
FIG. 4 is a schematic structural diagram of another user equipment according to an embodiment of the present invention;
FIG. 5 is a schematic flowchart of a method for transmitting data information according to an embodiment of the present invention;
FIG. 6 is a schematic flowchart of another method for transmitting data information according to an embodiment of the present invention;
FIG. 7 is a schematic structural diagram of another base station according to an embodiment of the present invention; and
FIG. 8 is a schematic structural diagram of another user equipment according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

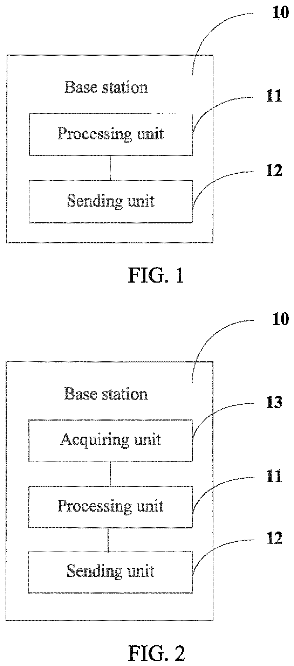

An embodiment of the present invention provides a base station 10. As shown in FIG. 1, the base station 10 includes:
a processing unit 11, configured to determine a carrier for sending data information, determine carrier indication information, and determine, according to the carrier indication information, a control message corresponding to the data information, where
the carrier includes two subcarriers, and the carrier indication information indicates that the data information corresponding to the control message is sent on the two subcarriers; and
a sending unit 12, configured to send the control message determined by the processing unit 11 to user equipment, so that the user equipment receives the data information according to the control message.

Specifically, the two subcarriers include a first subcarrier and a second subcarrier.

The processing unit 11 is specifically configured to: when it is determined that the carrier for sending the data information is the first carrier and the second carrier, determine that the carrier indication information is a first preset value.

Further, the control message includes a first processing manner and a second processing manner.

The processing unit 11 is specifically configured to: when it is determined that a processing manner corresponding to the first carrier is the first processing manner and a processing manner corresponding to the second carrier is the second processing manner, determine that the carrier indication information is the first preset value.

Specifically, the first processing manner may be a primary transport block modulation mode in a modulation method and a quantity of transport blocks, and the second processing manner may be a secondary transport block modulation mode in the modulation method and the quantity of transport blocks.

**Table 1**

| Modulation mode code | Primary transport block modulation mode | Secondary transport block modulation mode | Quantity of transport blocks |
|---|---|---|---|
| 111 | 16QAM | 16QAM | 2 |
| 110 | 16QAM | **QPSK** | 2 |
| 101 | 64QAM | Indicated by X_{ccs,7} | Indicated by X_{ccs,7} |
| 100 | 16QAM | **n/a** | 1 |
| 011 | QPSK | **QPSK** | 2 |
| 010 | 64QAM | 64QAM | 2 |
| 001 | 64QAM | 16QAM | 2 |
| 000 | **QPSK** | **n/a** | 1 |

It should be noted that, as shown in Table 1, Table 1 shows several manners corresponding to the modulation method and the quantity of transport blocks in the control message, data information on the first subcarrier may be a primary transport block, data information on the second subcarrier may be a secondary transport block, a modulation order of the first subcarrier is always higher than a modulation order of the second subcarrier, and a case in which a modulation order of a secondary transport block is higher than a modulation order of a primary transport block cannot be supported, which therefore limits scheduling. To avoid the problem, the carrier indication information may be used to instruct to exchange modulation methods of the first subcarrier and the second subcarrier.

Specifically, the processing unit 11 is further configured to: when it is determined that the processing manner corresponding to the first carrier is the second processing manner and the processing manner corresponding to the second carrier is the first processing manner, determine that the carrier indication information is a second preset value.

Specifically, in this embodiment of the present invention, the first preset value is 2, and the second preset value is 3.

Optionally, when the base station determines that the carrier for sending the data information is the first carrier or the second carrier, the base station may further execute the following two operation manners:
Manner 1: When determining that the carrier for sending the data information is the first carrier only, the base station determines that the carrier indication information is a third preset value.
Manner 2: When determining that the carrier for sending the data information is the second carrier only, the base station determines that the carrier indication information is a fourth preset value.

Exemplarily, the carrier includes a first subcarrier and a second subcarrier, the first subcarrier may be a main carrier, the second subcarrier may be a secondary carrier, and the carrier indication information may include four values: 0, 1, 2, and 3. When it is determined that a subcarrier on which the data information corresponding to the control message is located is a main carrier, it is determined that the carrier indication information is 0; when it is determined that the subcarrier on which the data information corresponding to the control message is located is a secondary carrier, it is determined that the carrier indication information is 1; when it is determined that the subcarrier on which the data information corresponding to the control message is located is a main carrier and a secondary carrier, it is determined that the carrier indication information is 2; and when it is determined that the subcarrier on which the data information corresponding to the control message is located is a main carrier and a secondary carrier, and exchange of modulation methods of the main carrier and the secondary carrier is determined, it is determined that the carrier indication information is 3.

Further, the base station sends the control message to the user equipment according to the carrier indication information in the following several manners:

Optionally, the control message includes the carrier indication information, and the sending unit 12 is further configured to send the control message that includes the carrier indication information to the user equipment.

Specifically, a first part of the control message includes 2-bit carrier indication information. After determining the carrier indication information, the base station determines the control message that includes the carrier indication information, and sends the control message to the user equipment.

Optionally, the control message includes a modulation method and a quantity of transport blocks. The processing unit 11 is further configured to determine the modulation method and the quantity of transport blocks according to the carrier indication information.

The sending unit 12 is specifically configured to send the control message that includes the modulation method and the quantity of transport blocks to the user equipment.

Specifically, the modulation method and the quantity of transport blocks are determined according to the carrier indication information. If it is determined that the carrier indication information is the first preset value, it is determined that values of the modulation method and the quantity of transport blocks are included in a first preset set; if it is determined that the carrier indication information is the second preset value, it is determined that values of the modulation method and the quantity of transport blocks are included in a second preset set, and the rest may be deduced by analogy.

**Table 2**

| Modulation mode code | Primary transport block modulation mode | Secondary transport block modulation mode | Quantity of transport blocks |
|---|---|---|---|
| 1111 | **64QAM** | **64QAM** | 2 |
| 1110 | **64QAM** | **16QAM** | **2** |
| 1101 | **64QAM** | **QPSK** | **2** |
| 1100 | 64QAM | **n/a** | **1** |
| 1011 | 16QAM | 64QAM | **2** |
| 1010 | 16QAM | 16QAM | **2** |
| 1001 | **16QAM** | **QPSK** | **2** |
| 1000 | **16QAM** | **n/a** | **1** |
| 0111 | **QPSK** | **64QAM** | **2** |
| 0110 | **QPSK** | **16QAM** | **2** |
| 0101 | QPSK | QPSK | **2** |
| 0100 | QPSK | **n/a** | **1** |
| 0011 | **n/a** | **64QAM** | **1** |
| 0010 | **n/a** | **16QAM** | **1** |
| 0001 | **n/a** | **QPSK** | **1** |

Exemplarily, as shown in Table 2, if information about the modulation method and the quantity of transport blocks in the control message includes four bits, the first preset set may include 1111, 1110, 1101, 1011, 1010, 1001, 0111, 0110, and 0101. When the base station determines that the carrier indication information is the first preset value, the modulation method and the quantity of transport blocks that are determined according to the carrier indication information may be one in the foregoing first preset set.

Further, to reduce overheads of the control message, when the data information is sent on the two subcarriers, a CCS in the first part of the control information is used to indicate a code channel set used by a data signal only on the first subcarrier, and all available data channel codes on the second subcarrier are used for data transmission by default. Exemplarily, when the second subcarrier includes seven available channel codes, the seven channel codes are all used to send data.

Further, to reduce overheads of the control message, the control message corresponding to the second subcarrier may be used to control data transmission in multiple TTIs (Transmission Time Interval, transmission time interval) at the same time. For example: for a 2.5 MHz carrier, a pre-configured quantity N of TTIs is 2, where N may also be another value, which is not limited in this embodiment of the present invention.

The base station may use one bit to indicate a quantity of TTIs. When a reserved bit is 0, it indicates that the control message controls current one TTI. When the reserved bit is 1, it indicates that the control information controls N TTIs starting from the current TTI.

It should be noted that, the N TTIs may be N continuous TTIs, or may be N TTIs at intervals of a preset time, which is not limited in this embodiment of the present invention.

Optionally, a second part of the control message includes two TBSs, which correspond to transport blocks on the first subcarrier and the second subcarrier respectively. A TBS corresponding to the transport block on the first subcarrier includes six bits; a TBS₂ corresponding to the transport block on the second subcarrier includes four bits; the HARQ process includes six bits, where three bits are used to indicate a process number of the first subcarrier, and the other three bits are used to indicate a process number of the second subcarrier. A process number on each carrier may have eight different values, for example, 0 to 7; in this way, after bits of the HARQ process are increased, process numbers of the two subcarriers may be allowed to be configured independently, thereby improving scheduling flexibility.

Optionally, the processing unit 11 is further configured to determine, according to the carrier indication information, a code channel number for sending the control message.

The sending unit 12 is specifically configured to send the control message to the user equipment by using the code channel number.

The code channel number for sending the control message may be a code channel number of a spreading code used for sending the control message.

Specifically, the carrier indication information being the first preset value corresponds to a first code channel number set, the carrier indication information being the second preset value corresponds to a second code channel number set, the carrier indication information being the third preset value corresponds to a third code channel number set, and the carrier indication information being the fourth preset value corresponds to a fourth code channel number set, where a code channel number in the code channel number set is the code channel number used for sending the control information.

Further, the processing unit 11 is further configured to determine a data channel code set in the control message according to the carrier indication information.

The sending unit 12 is further configured to send, by using the code channel number, the control message that includes the data channel code set to the user equipment.

It should be noted that, the first subcarrier and the second subcarrier are asymmetrical, and the second subcarrier has only seven (or three) available channel codes. Code channel numbers of a data channel of a subcarrier are continuous; therefore, a code channel number corresponding to the second subcarrier may be rendered less than 8 (or 4); herein, the code channel number corresponding to the second subcarrier may also be a set that includes seven (or three) continuous natural numbers, such as {3,4,5,6,7,8,9}, or {9,10,11,12,13,14,15}. In a case in which there are only three code channels, the code channel number set may be {3,4,5}, or {13,14,15}.

Optionally, when determining that the data information is sent by using the first subcarrier and the second subcarrier, and corresponding control information needs to be exchanged, the base station sets a CID in the first part of the control message to 3, and sends the control message by using a code channel number in the second code channel number set.

Optionally, as shown in FIG. 2, the base station further includes: an acquiring unit 13, configured to acquire identity information of the user equipment.

The processing unit 11 is further configured to determine a mask according to the identity information of the user equipment obtained by the acquiring unit 13 and the carrier indication information, and mask the control message by using the mask.

The sending unit 12 is specifically configured to send the control message masked by using the mask to the user equipment.

Specifically, after acquiring the identity information of the user equipment and determining the carrier indication information, the base station may execute an operation of (x_{ue,1,} x_{ue,2}, ..., x_{ue,16})+CID, and generate 48 bits according to a 1/2 convolutional code, where the 1^{st} bit, the 2^{nd} bit, the 4^{th} bit, the 8^{th} bit, the 42^{nd} bit, the 45^{th} bit, the 47^{th} bit, and the 48^{th} bit are removed to obtain a 40-bit mask.

The x_{ue,1} to x_{ue,16} are the identity information of the user equipment, and the CID represents the carrier indication information, and is expressed by using a binary number, such as 01. The foregoing "+" operation may be a bit-based exclusive OR operation.

Exemplarily, the base station may pad 0s to a binary code of the carrier indication information so that the carrier indication information becomes 16-bit information (C_{id,1,} C_{id,2}..., C_{id,15}, C_{id,16}), where a specific manner of padding 0s is not limited herein, which may be padding 0s to the front of the binary code corresponding to the CID, or padding 0s to the rear of the binary code, or padding 0s to both the front and the rear of the binary code; and the base station may execute an addition operation on the carrier indication information and the identity information, to obtain Xᵤₑ=(x_{ue,1,} x_{ue,2}, ..., x_{ue,16})+(C_{id,1}, C_{id,2},...,C_{id,15}, C_{id,16}) by means of the operation, where the used addition is a bit exclusive OR operation (modulo-2 addition), where X_{ue,k}=(X_{ue,k}+C_{id,k}) mod 2, and herein "=" represents reassignment, and "mod" represents a modulo operation.

Optionally, the carrier indication information may be included in a CRC (Cyclic Redundancy Check, cyclic redundancy check) verification code in the second part of the control message; 16 spare bits are generated from the control message according to the CRC verification code, a masking operation is performed on the 16 spare bits, and newly generated 16 bits are used as new spare bits.

Exemplarily, 16 spare bits cₖ(k=1,2,...,16) are generated from information bits in the control message according to the CRC verification code, a masking operation is executed on the 16 bits by using the formula (Cₖ+X_{ue,k}+C_{id,k}) mod 2 (k=1,2,...,16), and newly generated 16 bits are used as new spare bits, where "mod" represents a modulo operation.

It should be noted that, the foregoing solution may resolve that in a scenario in which no MIMO (Multiple-Input Multiple-Output, Multiple-Input Multiple-Output) is configured on any subcarrier, more than two transport blocks may be transmitted on a subcarrier when MIMO is configured on the subcarrier, and in this case, scheduling may be limited if one control message is used to control two subcarriers; therefore, a control message is sent for each subcarrier separately, and carrier indication information is transferred implicitly by using the method, in the foregoing embodiment, of expressing the carrier indication information by using a code channel number or a mask.

By using the foregoing base station, the base station determines a carrier for sending data information, determines carrier indication information, and sends a control message corresponding to the data information to user equipment according to the carrier indication information, so that the user equipment receives the data information according to the control message. In this way, the control message corresponds to two subcarriers, and the user equipment may determine, according to the control message sent by the base station, the data information corresponding to the control message, and may control data transmission on the two subcarriers according to one control message, thereby improving utilization efficiency of the control message.

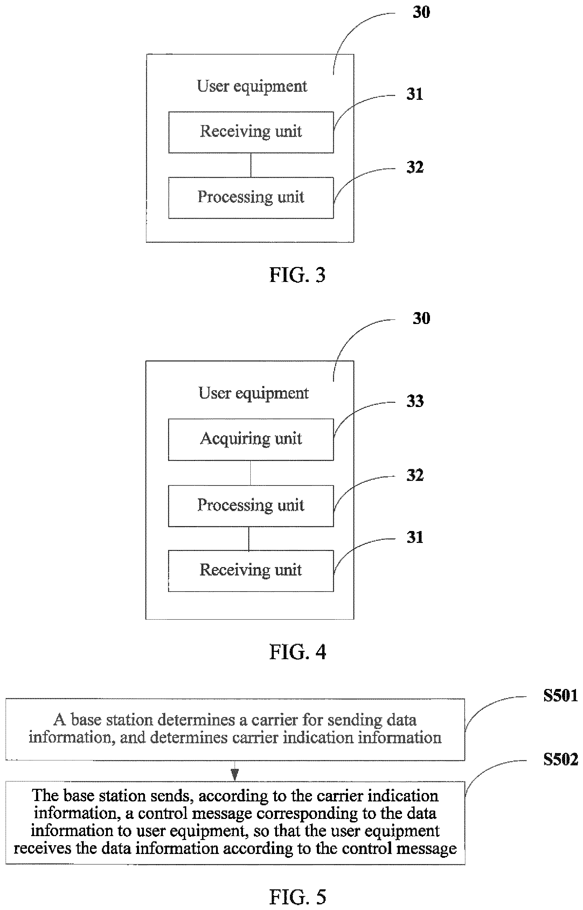

An embodiment of the present invention provides user equipment 30. As shown in FIG. 3, the user equipment 30 includes:
a receiving unit 31, configured to: after a base station sends a control message corresponding to data information to the user equipment according to carrier indication information, acquire the control message, where
the data information is transmitted by using two subcarriers; and
a processing unit 32, configured to acquire the carrier indication information according to the control message received by the receiving unit 31, and when it is determined, according to the carrier indication information, that the data information is carried on the two subcarriers, perform data processing on the two subcarriers according to the control message, to acquire the data information, where the carrier indication information indicates a subcarrier on which the data information corresponding to the control message is located.

Specifically, the control message includes two parts, where a first part includes a CCS (Channelization-code-set information, channelization code set), a modulation method, and a quantity of transport blocks, and a second part includes a TBS (Transport-block size information, transport block size information), an HARQ process (Hybrid-ARQ process information, hybrid automatic repeat request process information), and an RV (Redundancy and constellation version, redundancy and constellation version information). In addition, the control information further includes identity information (UE identity) of the user equipment, which exists in both the first part and the second part.

Further, the user equipment acquires the carrier indication information according to the control message in the following several implementation manners.

Optionally, the control message includes the carrier indication information.

The processing unit 32 is specifically configured to acquire the carrier indication information in the control message.

Specifically, the carrier indication information may be a CID (carrier indicator, carrier indicator) carrier indicator, and the first part of the control message includes the CID. After acquiring the control message, the user equipment acquires the CID in the control message.

Optionally, the control message includes a modulation method and a quantity of transport blocks.

The processing unit 32 is specifically configured to acquire the modulation method and the quantity of transport blocks according to the control message, and determine the carrier indication information according to the modulation method and the quantity of transport blocks.

Specifically, after acquiring the control message, the user equipment acquires the modulation method and the quantity of transport blocks according to the control message. If the modulation method and the quantity of transport blocks meet a first preset set, it is determined that the carrier indication information is a first preset value; or if the modulation method and the quantity of transport blocks meet a second preset set, it is determined that the carrier indication information is a second preset value, and the rest may be deduced by analogy.

Exemplarily, as shown in Table 2 in the foregoing embodiment, information about the modulation method and the quantity of transport blocks includes four bits, and in this case, the first preset set may include 1111, 1110, 1101, 1011, 1010, 1001, 0111, 0110, and 0101. After acquiring the control message, the user equipment acquires the modulation method and the quantity of transport blocks according to the control message, and if determining that the modulation method and the quantity of transport blocks are any one in the foregoing first preset set, the user equipment determines that the carrier indication information is the first preset value.

Further, to reduce overheads of the control message, when the data information is sent on the two subcarriers, a CCS in the first part of the control information is used to only indicate a code channel set used by a data signal on a first subcarrier, and all available data channel codes on a second subcarrier are used for data transmission by default. Exemplarily, when the second subcarrier includes seven available channel codes, the seven channel codes are all used to send data.

Further, to reduce overheads of the control message, the control message corresponding to the second subcarrier may be used to control data transmission in multiple TTIs (Transmission Time Interval, transmission time interval) at the same time. For example: for a 2.5 MHz carrier, a pre-configured quantity N of TTIs is 2, where N may also be another value, which is not limited in this embodiment of the present invention.

The base station may use one bit to indicate a quantity of TTIs. When a reserved bit is 0, it indicates that the control message controls current one TTI. When the reserved bit is 1, it indicates that control information controls N TTIs starting from the current TTI; and after receiving the control message, the user equipment performs data processing on next N continuous TTIs by using the same control information.

It should be noted that, the N TTIs may be N continuous TTIs, or may be N TTIs at intervals of a preset time, which is not limited in this embodiment of the present invention.

Optionally, the second part of the control message includes two TBSs, which correspond to transport blocks on the first subcarrier and the second subcarrier respectively. A TBS₁ corresponding to the transport block on the first subcarrier includes six bits; a TBS₂ corresponding to the transport block on the second subcarrier includes four bits; the HARQ process includes six bits, where three bits are used to indicate a process number of the first subcarrier, and the other three bits are used to indicate a process number of the second subcarrier. A process number on each carrier may have eight different values, for example, 0 to 7; in this way, after bits of the HARQ process are increased, process numbers of the two subcarriers may be allowed to be configured independently, thereby improving scheduling flexibility.

Optionally, the processing unit 32 is specifically configured to determine a code channel number corresponding to the control message received by the receiving unit, and determine the carrier indication information according to the code channel number.

The code channel number corresponding to the received control message may be a code channel number of a spreading code used for receiving the control message.

Further, the processing unit 32 is further configured to: before the carrier indication information is determined according to the code channel number, determine a data channel code set according to the control message, and determine the carrier indication information according to the code channel number and the data channel code set.

Specifically, after acquiring the control message, the user equipment acquires a data channel code set according to the control message, and determines an origin flag O (origin, origin) of the data channel code set; when determining that a value of the origin flag is greater than or equal to a preset threshold (or the data channel code set includes a code channel number not included in the preset data channel code set), the user equipment determines that the data information is carried on the first carrier; and when determining that the value of the origin flag is less than the preset threshold, the user equipment performs determining according to a code channel number set in which the control message is located. If determining that a first code channel number set includes the code channel number, the user equipment determines that the carrier indication information is the first preset value; if determining that a second code channel number set includes the code channel number, the user equipment determines that the carrier indication information is the second preset value, and the rest may be deduced by analogy, where a code channel number in the code channel number set is the code channel number used for receiving the control information.

Exemplarily, the first subcarrier and the second subcarrier are asymmetrical, and the second subcarrier may use only seven (or three) channel codes. Code channel numbers of a data channel of a subcarrier are continuous; therefore, a code channel number corresponding to the second subcarrier is less than 8 (or 4), so that after acquiring the control message, the user equipment acquires a data channel code set according to the control message, and determines an origin flag of the data channel code set. When determining that a value of the origin flag is greater than or equal to 8, the user equipment may determine that the data information is carried on the first subcarrier; and when determining that the value of the origin flag is less than 8, the user equipment further performs determining according to a code channel number set in which a code channel number of a spreading code corresponding to the control information is located; when determining that the code channel number 5 is included in the first code channel number set {5,6}, the user equipment determines that the carrier indication information is the first preset value, and determines that a data message is carried on the first subcarrier and the second subcarrier.

Optionally, when determining that the code channel number is included in the first code channel number set, if it is determined that a CID in the first part of the control message is the second preset value, the user equipment determines to exchange control information corresponding to the first subcarrier and the second subcarrier.

Optionally, as shown in FIG. 4, the user equipment 30 further includes: an acquiring unit 33, configured to: before the control message is acquired according to the carrier, acquire identity information of the user equipment.

The processing unit 32 is further configured to determine preset carrier indication information, and obtain a mask according to the identity information obtained by the acquiring unit 33 and the preset carrier indication information.

The receiving unit 31 is further configured to detect the control message on the carrier by using the mask obtained by the processing unit.

The processing unit 32 is further configured to determine that a first mask of the control message is detected on the carrier, determine first preset carrier indication information corresponding to the first mask, and determine that the first preset carrier indication information is the carrier indication information.

The preset carrier indication information is possible carrier indication information.

Specifically, the user equipment may execute an operation of (x_{ue,1}, x_{ue,2}, ..., x_{ue,16})+CID according to the identity information of the user equipment and the possible carrier indication information, and generate 48 bits according to a 1/2 convolutional code, where the 1^{st} bit, the 2^{nd} bit, the 4^{th} bit, the 8^{th} bit, the 42^{nd} bit, the 45^{th} bit, the 47^{th} bit, and the 48^{th} bit are removed to obtain a 40-bit mask.

x_{ue,1} to x_{ue,16} are the identity information of the user equipment, and the CID represents the carrier indication information.

Exemplarily, the base station may pad 0s to a binary code of the carrier indication information so that the carrier indication information becomes 16-bit information (C_{id,1}, C_{id,2}..., C_{id,15}, C_{id,16}), and execute an addition operation on the carrier indication information and the identity information, to obtain Xᵤₑ =(x_{ue,1,} x_{ue,2}, ..., x_{ue,16})+(C_{id,1},C_{id,2},...,C_{id,15},C_{id,16}) by means of the operation, where the used addition is a bit exclusive OR operation (modulo-2 addition).

Optionally, the carrier indication information may be included in a CRC (Cyclic Redundancy Check, cyclic redundancy check) verification code in the second part of the control message; 16 spare bits are generated from the control message according to the CRC verification code, a masking operation is performed on the 16 spare bits, and newly generated 16 bits are used as new spare bits.

Further, after acquiring the identity information of the user equipment, the user equipment adds the identity information to the preset carrier indication information to obtain a mask, detects the carrier by using the mask, and when the control message is detected according to the mask, determines that the preset carrier indication information that forms the mask is the carrier indication information.

It should be noted that, the foregoing solution may resolve that in a scenario in which no MIMO (Multiple-Input Multiple-Output, Multiple-Input Multiple-Output) is configured on any subcarrier, more than two transport blocks may be transmitted on a subcarrier when MIMO is configured on the subcarrier, and in this case, scheduling may be limited if one control message is used to control two subcarriers; therefore, the base station sends a control message for each subcarrier separately, and carrier indication information is transferred implicitly by using the method, in the foregoing embodiment, of expressing the carrier indication information by using a code channel number or a mask. The user equipment demodulates more than two control messages on the first subcarrier at the same time, identifies, according to the carrier indication information, data information corresponding to the control messages, receives the data information according to the more than two control messages, and processes the data information.

Further, the two subcarriers include a first subcarrier and a second subcarrier.

The processing unit 32 is further configured to: when it is determined that the carrier indication information is a first preset value, determine that the data information is carried on the first subcarrier and the second subcarrier, and perform data processing on the first subcarrier and the second subcarrier according to the control message.

Further, the control message includes a first processing manner and a second processing manner.

The processing unit 32 is specifically configured to determine the first processing manner according to the control message, and perform data processing on the first subcarrier according to the first processing manner; determine the second processing manner according to the control message, and perform data processing on the second subcarrier according to the second processing manner.

Specifically, the first processing manner may be a primary transport block modulation mode in a modulation method and a quantity of transport blocks, and the second processing manner may be a secondary transport block modulation mode in the modulation method and the quantity of transport blocks.

It should be noted that, as shown in Table 1 in the foregoing embodiment, data information on the first subcarrier may be a primary transport block, data information on the second subcarrier may be a secondary transport block, a modulation order of the first subcarrier is always higher than a modulation order of the second subcarrier, and a case in which a modulation order of a secondary transport block is higher than a modulation order of a primary transport block cannot be supported, which therefore limits scheduling. To avoid the problem, the carrier indication information may be used to instruct to exchange modulation methods of the first subcarrier and the second subcarrier.

Specifcally, the processing unit 32 is further configured to: when it is determined that the carrier indication information is the second preset value, determine that the data information is carried on the first subcarrier and the second subcarrier, perform data processing on the first carrier according to the second processing manner, and perform data processing on the second carrier according to the first processing manner.

Specifically, the first preset value is 2, and the second preset value is 3.

Further, when the carrier indication information is the second preset value, the carrier indication information may further indicate exchange of all control information corresponding to the first subcarrier and the second subcarrier, such as a modulation method, a TBS (Transport-block size information, transport block size information), and an RV (Redundancy and constellation version, redundancy and constellation version).

Optionally, when the base station determines that the carrier for sending the data information is the first carrier or the second carrier, the base station may execute the following two operation manners:
Manner 1: When determining that the carrier for sending the data information is the first carrier only, the base station determines that the carrier indication information is a third preset value.
Manner 2: When determining that the carrier for sending the data information is the second carrier only, the base station determines that the carrier indication information is a fourth preset value.

Exemplarily, the carrier includes a first subcarrier and a second subcarrier, the first subcarrier may be a main carrier, the second subcarrier may be a secondary carrier, and the carrier indication information may include four values: 0, 1, 2, and 3. When it is determined that a subcarrier on which the data information corresponding to the control message is located is a main carrier, it is determined that the carrier indication information is 0; when it is determined that the subcarrier on which the data information corresponding to the control message is located is a secondary carrier, it is determined that the carrier indication information is 1; when it is determined that the subcarrier on which the data information corresponding to the control message is located is a main carrier and a secondary carrier, it is determined that the carrier indication information is 2; and when it is determined that the subcarrier on which the data information corresponding to the control message is located is a main carrier and a secondary carrier, and exchange of modulation methods of the main carrier and the secondary carrier is determined, it is determined that the carrier indication information is 3.

By using the foregoing user equipment, after a base station sends a control message corresponding to data information to the user equipment by using a carrier, the user equipment acquires the control message by using the carrier, acquires carrier indication information according to the control message, and when determining, according to the carrier indication information, that the data information is carried on two subcarriers, performs data processing on the two subcarriers according to the control message, to acquire the data information. In this way, the control message corresponds to the two subcarriers, and the user equipment may determine, according to the control message sent by the base station, the data information corresponding to the control message, and may control data transmission on the two subcarriers according to one control message, thereby improving utilization efficiency of the control message.

An embodiment of the present invention provides a method for transmitting data information. As shown in FIG. 5, the method is executed by a base station, and the method includes:
S501: A base station determines a carrier for sending data information, and determines carrier indication information.

The carrier includes two subcarriers, and the carrier indication information indicates that the data information corresponding to a control message is sent on the two subcarriers.

Specifically, the two subcarriers include a first subcarrier and a second subcarrier, and when determining that the carrier for sending the data information is the first carrier and the second carrier, the base station determines that the carrier indication information is a first preset value.

Further, the control message includes a first processing manner and a second processing manner, and when determining that a processing manner corresponding to the first carrier is the first processing manner and a processing manner corresponding to the second carrier is the second processing manner, the base station determines that the carrier indication information is the first preset value.

Specifically, the first processing manner may be a primary transport block modulation mode in a modulation method and a quantity of transport blocks, and the second processing manner may be a secondary transport block modulation mode in the modulation method and the quantity of transport blocks.

It should be noted that, as shown in Table 1 in the foregoing embodiment, data information on the first subcarrier may be a primary transport block, data information on the second subcarrier may be a secondary transport block, a modulation order of the first subcarrier is always higher than a modulation order of the second subcarrier, and a case in which a modulation order of a secondary transport block is higher than a modulation order of a primary transport block cannot be supported, which therefore limits scheduling. To avoid the problem, the carrier indication information may be used to instruct to exchange modulation methods of the first subcarrier and the second subcarrier.

Specifically, if it is determined that the carrier for sending the data information is the first carrier and the second carrier, when determining that the processing manner corresponding to the first carrier is the second processing manner and the processing manner corresponding to the second carrier is the first processing manner, the base station determines that the carrier indication information is a second preset value.

Further, when the carrier indication information is the second preset value, the carrier indication information may further indicate exchange of all control information corresponding to the first subcarrier and the second subcarrier, such as a modulation method, a TBS (Transport-block size information, transport block size information), and an RV (Redundancy and constellation version, redundancy and constellation version).

Optionally, when the base station determines that the carrier for sending the data information is the first carrier or the second carrier, the base station may further execute the following two operation manners:
Manner 1: When determining that the carrier for sending the data information is the first carrier only, the base station determines that the carrier indication information is a third preset value.
Manner 2: When determining that the carrier for sending the data information is the second carrier only, the base station determines that the carrier indication information is a fourth preset value.

Exemplarily, the carrier includes a first subcarrier and a second subcarrier, the first subcarrier may be a main carrier, the second subcarrier may be a secondary carrier, and the carrier indication information may include four values: 0, 1, 2, and 3. When it is determined that a subcarrier on which the data information corresponding to the control message is located is a main carrier, it is determined that the carrier indication information is 0; when it is determined that the subcarrier on which the data information corresponding to the control message is located is a secondary carrier, it is determined that the carrier indication information is 1; when it is determined that the subcarrier on which the data information corresponding to the control message is located is a main carrier and a secondary carrier, it is determined that the carrier indication information is 2; and when it is determined that the subcarrier on which the data information corresponding to the control message is located is a main carrier and a secondary carrier, and exchange of modulation methods of the main carrier and the secondary carrier is determined, it is determined that the carrier indication information is 3.
S502: The base station sends, according to the carrier indication information, a control message corresponding to the data information to user equipment, so that the user equipment receives the data information according to the control message.

Specifically, the control message includes two parts, where a first part includes a CCS (Channelization-code-set information, channelization code set), a modulation method, and a quantity of transport blocks, and a second part includes a TBS (Transport-block size information, transport block size information), an HARQ process (Hybrid-ARQ process information, hybrid automatic repeat request process information), and an RV (Redundancy and constellation version, redundancy and constellation version). In addition, the control information further includes identity information (UE identity) of the user equipment, which exists in both the first part and the second part.

Further, the base station determines the control message according to the carrier indication information in the following several possible implementation manners.

Optionally, the control message includes the carrier indication information, and the base station sends the control message that includes the carrier indication information to the user equipment.

Specifically, the first part of the control message includes 2-bit carrier indication information. After determining the carrier indication information, the base station determines the control message that includes the carrier indication information.

Optionally, the control message includes a modulation method and a quantity of transport blocks. The base station determines the modulation method and the quantity of transport blocks according to the carrier indication information, and sends the control message that includes the modulation method and the quantity of transport blocks to the user equipment.

Specifically, the modulation method and the quantity of transport blocks are determined according to the carrier indication information. If it is determined that the carrier indication information is the first preset value, it is determined that values of the modulation method and the quantity of transport blocks are included in a first preset set; if it is determined that the carrier indication information is the second preset value, it is determined that values of the modulation method and the quantity of transport blocks are included in a second preset set, and the rest may be deduced by analogy.

Exemplarily, as shown in Table 2 in the foregoing embodiment, if information about the modulation method and the quantity of transport blocks in the control message includes four bits, the first preset set may include 1111, 1110, 1101, 1011, 1010, 1001, 0111, 0110, and 0101. When the base station determines that the carrier indication information is the first preset value, the modulation method and the quantity of transport blocks that are determined according to the carrier indication information may be one in the foregoing first preset set.

Further, to reduce overheads of the control message, when the data information is sent on the two subcarriers, the CCS in the first part of the control information is used to indicate a code channel set used by a data signal only on the first subcarrier, and all available data channel codes on the second subcarrier are used for data transmission by default. Exemplarily, when the second subcarrier includes seven available channel codes, the seven channel codes are all used to send data.

Further, to reduce overheads of the control message, the control message corresponding to the second subcarrier may be used to control data transmission in multiple TTIs (Transmission Time Interval, transmission time interval) at the same time. For example, for a 2.5 MHz carrier, a pre-configured quantity N of TTIs is 2, where N may also be another value, which is not limited in this embodiment of the present invention.

The base station may use one bit to indicate a quantity of TTIs. When a reserved bit is 0, it indicates that the control message controls current one TTI. When a reserved bit is 1, it indicates that the control information controls N TTIs starting from the current TTI.

It should be noted that, the N TTIs may be N continuous TTIs, or may be N TTIs at intervals of a preset time, which is not limited in this embodiment of the present invention.

Optionally, the second part of the control message includes two TBSs, which correspond to transport blocks on the first subcarrier and the second subcarrier respectively. A TBS corresponding to the transport block on the first subcarrier includes six bits; a TBS₂ corresponding to the transport block on the second subcarrier includes four bits; the HARQ process includes six bits, where three bits are used to indicate a process number of the first subcarrier, and the other three bits are used to indicate a process number of the second subcarrier. A process number on each carrier may have eight different values, for example, 0 to 7, a process number on each carrier may have eight different values, for example, 0 to 7; in this way, after bits of the HARQ process are increased, process numbers of the two subcarriers may be allowed to be configured independently, thereby improving scheduling flexibility.

Optionally, the base station determines, according to the carrier indication information, a code channel number for sending the control message, and sends the control message to the user equipment by using the code channel number.

The code channel number for sending the control message may be a code channel number of a spreading code used for sending the control message.

Specifically, the carrier indication information being the first preset value corresponds to a first code channel number set, the carrier indication information being the second preset value corresponds to a second code channel number set, the carrier indication information being the third preset value corresponds to a third code channel number set, and the carrier indication information being the fourth preset value corresponds to a fourth code channel number set, where a code channel number in the code channel number set is the code channel number used for sending the control information.

Further, the base station determines a data channel code set in the control message according to the carrier indication information, and sends, by using the code channel number, the control message that includes the data channel code set to the user equipment.

It should be noted that, the first subcarrier and the second subcarrier are asymmetrical, and the second subcarrier may use only seven (or three) channel codes. Code channel numbers of a data channel of a subcarrier are continuous; therefore, a code channel number corresponding to the second subcarrier may be less than 8 (or 4); herein, the code channel number corresponding to the second subcarrier may also be a set that includes seven (or three) continuous natural numbers, such as {3,4,5,6,7,8,9}, or {9,10,11,12,13,14,15}. In a case in which there are only three code channels, the code channel number set may be {3,4,5}, or {13,14,15}.

Optionally, when determining that the data information is sent by using the first subcarrier and the second subcarrier, and the corresponding control information needs to be exchanged, the base station sets a CID in the first part of the control message to 3, and sends the control message by using a code channel number in the first code channel number set.

Optionally, the base station acquires identity information of the user equipment, determines a mask according to the identity information of the user equipment and the carrier indication information, masks the control message by using the mask, and sends the control message masked by using the mask to the user equipment.

Specifically, after acquiring the identity information of the user equipment and determining the carrier indication information, the base station may execute an operation of (x_{ue,1}, x_{ue,2}, ..., x_{ue,16})+CID, and generate 48 bits according to a 1/2 convolutional code, where the 1^{st} bit, the 2^{nd} bit, the 4^{th} bit, the 8^{th} bit, the 42^{nd} bit, the 45^{th} bit, the 47^{th} bit, and the 48^{th} bit are removed to obtain a 40-bit mask.

x_{ue,1} to x_{ue,16} are the identity information of the user equipment, and the CID represents the carrier indication information. The foregoing "+" operation may be a bit-based exclusive OR operation.

Exemplarily, the base station may pad 0s to a binary code of the carrier indication information so that the carrier indication information becomes 16-bit information (C_{id,1}, C_{id,2}..., C_{id,15}, C_{id,16}), where a specific manner of padding 0s is not limited herein, which may be padding 0s to the front of the binary code corresponding to the CID, or padding 0s to the rear of the binary code, or padding 0s to both the front and the rear of the binary code; and execute an addition operation on the carrier indication information and the identity information, to obtain Xᵤₑ=(X_{ue,1}, x_{ue,2}, ..., X_{ue,1}6)+(C_{id,1},C_{id,}2,...,C_{id,15,}C_{id,16}) by means of the operation, where the used addition is a bit exclusive OR operation (modulo-2 addition).

Optionally, the carrier indication information may be included in a CRC (Cyclic Redundancy Check, cyclic redundancy check) verification code in the second part of the control message; 16 spare bits are generated from the control message according to the CRC verification code, a masking operation is performed on the 16 spare bits, and newly generated 16 bits are used as new spare bits.

Exemplarily, 16 spare bits cₖ(k=1,2,...,16) are generated from information bits in the control message according to the CRC verification code, a masking operation is executed on the 16 bits by using the formula (cₖ+_{Xue,k}+_{Cid,k}) mold2 (k=1,2,...,16), and newly generated 16 bits are used as new spare bits, where mod2 is a modulo-2 exclusive OR addition operation.

It should be noted that, the foregoing solution may resolve that in a scenario in which no MIMO (Multiple-Input Multiple-Output, Multiple-Input Multiple-Output) is configured on any subcarrier, more than two transport blocks may be transmitted on a subcarrier when MIMO is configured on the subcarrier, and in this case, scheduling may be limited if one control message is used to control two subcarriers; therefore, a control message is sent for each subcarrier separately, and carrier indication information is transferred implicitly by using the method, in the foregoing embodiment, of expressing the carrier indication information by using a code channel number or a mask.

By using the foregoing method executed by a base station, the base station determines a carrier for sending data information, determines carrier indication information, and sends a control message corresponding to the data information to user equipment according to the carrier indication information, so that the user equipment receives the data information according to the control message. In this way, the control message corresponds to two subcarriers, and the user equipment may determine, according to the control message sent by the base station, the data information corresponding to the control message, and may control data transmission on the two subcarriers according to one control message, thereby improving utilization efficiency of the control message.

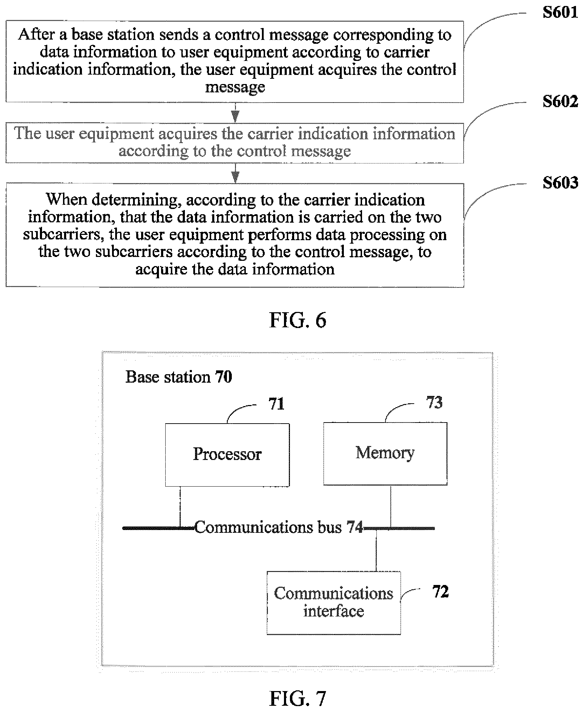

An embodiment of the present invention provides a method for receiving data information. As shown in FIG. 6, the method is executed by user equipment, and the method includes:
S601: After a base station sends a control message corresponding to data information to user equipment according to carrier indication information, the user equipment acquires the control message.

The data information is transmitted by using two subcarriers.

Specifically, the control message includes two parts, where a first part includes a CCS (Channelization-code-set information, channelization code set), a modulation method, and a quantity of transport blocks, and a second part includes a TBS (Transport-block size information, transport block size information), an HARQ process (Hybrid-ARQ process information, hybrid automatic repeat request process information), and an RV (Redundancy and constellation version, redundancy and constellation version). In addition, the control information further includes identity information (UE identity) of the user equipment, which exists in both the first part and the second part.
S602: The user equipment acquires the carrier indication information according to the control message.

The carrier indication information indicates a subcarrier on which the data information corresponding to the control message is located.

Optionally, the control message includes the carrier indication information, and the user equipment acquires the carrier indication information in the control message.

Specifically, the carrier indication information may be a CID (carrier indicator, carrier indicator) carrier indicator, and the first part of the control message includes the CID. After acquiring the control message, the user equipment acquires the CID in the control message.

Optionally, the control message includes a modulation method and a quantity of transport blocks, and the user equipment acquires the modulation method and the quantity of transport blocks according to the control message, and determines the carrier indication information according to the modulation method and the quantity of transport blocks.

Specifically, after acquiring the control message, the user equipment acquires the modulation method and the quantity of transport blocks according to the control message. If the modulation method and the quantity of transport blocks meet a first preset set, it is determined that the carrier indication information is a first preset value; if the modulation method and the quantity of transport blocks meet a second preset set, it is determined that the carrier indication information is a second preset value, and the rest may be deduced by analogy.

Exemplarily, as shown in Table 2 in the foregoing embodiment, information about the modulation method and the quantity of transport blocks includes four bits, and in this case, the first preset set may include 1111, 1110, 1101, 1011, 1010, 1001, 0111, 0110, and 0101. After acquiring the control message, the user equipment acquires the modulation method and the quantity of transport blocks according to the control message, and if determining that the modulation method and the quantity of transport blocks are any one in the foregoing first preset set, the user equipment determines that the carrier indication information is the first preset value.

Further, to reduce overheads of the control message, when the data information is sent on the two subcarriers, a CCS in the first part of the control information is used to only indicate a code channel set used by a data signal on a first subcarrier, and all available data channel codes on a second subcarrier are used for data transmission by default. Exemplarily, when the second subcarrier includes seven available channel codes, the seven channel codes are all used to send data.

Further, to reduce overheads of the control message, the control message corresponding to the second subcarrier may be used to control data transmission in multiple TTIs (Transmission Time Interval, transmission time interval) at the same time. For example: for a 2.5 MHz carrier, a pre-configured quantity N of TTIs is 2, where N may also be another value, which is not limited in this embodiment of the present invention.

The base station may use one bit reserved in the control message to indicate a quantity of TTIs. When the reserved bit is 0, it indicates that the control message controls current one TTI. When the reserved bit is 1, it indicates that control information controls N TTIs starting from the current TTI; and after receiving the control message, the user equipment performs data processing on next N continuous TTIs by using the same control information.

It should be noted that, the N TTIs may be N continuous TTIs, or may be N TTIs at intervals of a preset time, which is not limited in this embodiment of the present invention.

Optionally, the second part of the control message includes two TBSs, which correspond to transport blocks on the first subcarrier and the second subcarrier respectively. A TBSp corresponding to the transport block on the first subcarrier includes six bits; a TBS₂ corresponding to the transport block on the second subcarrier includes four bits; the HARQ process is increased to six bits, where three bits are used to indicate a process number of the first subcarrier, and the other three bits are used to indicate a process number of the second subcarrier. A process number on each carrier may have eight different values, for example, 0 to 7; in this way, after bits of the HARQ process are increased, process numbers of the two subcarriers may be allowed to be configured independently, thereby improving scheduling flexibility.

Optionally, the user equipment determines a code channel number corresponding to the received control message, and determines the carrier indication information according to the code channel number.

Further, the user equipment determines a data channel code set according to the control message, and determines the carrier indication information according to the code channel number and the data channel code set.

Specifically, after acquiring the control message, the user equipment acquires a data channel code set according to the control message, and determines an origin flag O (origin, origin) of the data channel code set; when determining that a value of the origin flag is greater than or equal to a preset threshold (or the data channel code set includes a code channel number not included in the preset data channel code set), the user equipment determines that the data information is carried on the first carrier; and when determining that the value of the origin flag is less than the preset threshold, the user equipment performs determining according to a code channel number set in which the control message is located. If determining that a first code channel number set includes the code channel number, the user equipment determines that the carrier indication information is the first preset value; if determining that a second code channel number set includes the code channel number, the user equipment determines that the carrier indication information is the second preset value, and the rest may be deduced by analogy, where a code channel number in the code channel number set is the code channel number used for receiving the control information.

Exemplarily, the first subcarrier and the second subcarrier are asymmetrical, and the second subcarrier may use only seven (or three) channel codes. Code channel numbers of a data channel of a subcarrier are continuous; therefore, a code channel number corresponding to the second subcarrier is less than 8 (or 4), so that after acquiring the control message, the user equipment acquires a data channel code set according to the control message, and determines an origin flag of the data channel code set; when determining that a value of the origin flag is greater than or equal to 8, the user equipment may determine that the data information is carried on the first subcarrier; and when determining that the value of the origin flag is less than 8, the user equipment further performs determining according to a code channel number set in which a code channel number of a spreading code corresponding to the control information is located; when determining that the code channel number 5 is included in the first code channel number set {5,6}, the user equipment determines that the carrier indication information is the first preset value, and determines that a data message is carried on the first subcarrier and the second subcarrier.

Optionally, when determining that the code channel number is included in a first code channel number set, if it is determined that a CID in the first part of the control message is the second preset value, the user equipment determines to exchange control information corresponding to the first subcarrier and the second subcarrier.

Optionally, the user equipment acquires identity information of the user equipment, determines preset carrier indication information, obtains a mask according to the identity information and the preset carrier indication information, detects the control message on the carrier by using the mask, determines that a first mask of the control message is detected on the carrier, determines first preset carrier indication information corresponding to the first mask, and determines that the first preset carrier indication information is the carrier indication information.

The preset carrier indication information is possible carrier indication information.

Specifically, the user equipment may execute an operation of (x_{ue,1}, x_{ue,2}, ..., x_{ue,16})+CID according to the identity information of the user equipment and the possible carrier indication information, and generate 48 bits according to a 1/2 convolutional code, where the 1^{st} bit, the 2^{nd} bit, the 4^{th} bit, the 8^{th} bit, the 42^{nd} bit, the 45^{th} bit, the 47^{th} bit, and the 48^{th} bit are removed to obtain a 40-bit mask.

x_{ue,1} to x_{ue,16} are the identity information of the user equipment, and the CID represents the carrier indication information.

Exemplarily, the base station may pad 0s to a binary code of the carrier indication information so that the carrier indication information becomes 16-bit information (C_{id,1}, C_{id,2}..., C_{id,15}, C_{id,16}); and execute an addition operation on the carrier indication information and the identity information, to obtain Xᵤₑ=(x_{ue,1}, x_{ue,2}, ..., x_{ue,16})+(C_{id,15} C_{id,2},...,C_{id,15}, C_{id,16}) by means of the operation, where the used addition is a bit exclusive OR operation (modulo-2 addition).

Optionally, the carrier indication information may be included in a CRC (Cyclic Redundancy Check, cyclic redundancy check) verification code in the second part of the control message; 16 spare bits are generated from the control message according to the CRC verification code, a masking operation is performed on the 16 spare bits, and newly generated 16 bits are used as new spare bits.

Further, after acquiring the identity information of the user equipment, the user equipment adds the identity information to the preset carrier indication information to obtain a mask, detects the carrier by using the mask, and when the control message is detected according to the mask, determines that the preset carrier indication information that forms the mask is the carrier indication information.

It should be noted that, the foregoing solution may resolve that in a scenario in which no MIMO (Multiple-Input Multiple-Output, Multiple-Input Multiple-Output) is configured on any subcarrier, more than two transport blocks may be transmitted on a subcarrier when MIMO is configured on the subcarrier, and in this case, scheduling may be limited if one control message is used to control two subcarriers; therefore, the base station sends a control message for each subcarrier separately, and carrier indication information is transferred implicitly by using the method, in the foregoing embodiment, of expressing the carrier indication information by using a code channel number or a mask. The user equipment demodulates more than two control messages on the first subcarrier at the same time, identifies, according to the carrier indication information, data information corresponding to the control messages, receives the data information according to the more than two control messages, and processes the data information.

S603: When determining, according to the carrier indication information, that the data information is carried on the two subcarriers, the user equipment performs data processing on the two subcarriers according to the control message, to acquire the data information.

Optionally, the two subcarriers include a first subcarrier and a second subcarrier, and when determining that the carrier indication information is the first preset value, the user equipment determines that the data information is carried on the first subcarrier and the second subcarrier, and performs data processing on the first subcarrier and the second subcarrier according to the control message.

Specifically, the control message includes a first processing manner and a second processing manner; the user equipment determines the first processing manner according to the control message, and performs data processing on the first subcarrier according to the first processing manner; determines the second processing manner according to the control message, and performs data processing on the second subcarrier according to the second processing manner.

Specifically, the first processing manner may be a primary transport block modulation mode in a modulation method and a quantity of transport blocks, and the second processing manner may be a secondary transport block modulation mode in the modulation method and the quantity of transport blocks.

It should be noted that, as shown in Table 1 in the foregoing embodiment, data information on the first subcarrier may be a primary transport block, data information on the second subcarrier may be a secondary transport block, a modulation order of the first subcarrier is always higher than a modulation order of the second subcarrier, and a case in which a modulation order of a secondary transport block is higher than a modulation order of a primary transport block cannot be supported, which therefore limits scheduling. To avoid the problem, the carrier indication information may be used to instruct to exchange modulation methods of the first subcarrier and the second subcarrier.

Specifically, when it is determined that the carrier indication information is a second preset value, it is determined that the data information is carried on the first subcarrier and the second subcarrier, data processing is performed on the first carrier according to the second processing manner, and data processing is performed on the second carrier according to the first processing manner.

Further, when the carrier indication information is the second preset value, the carrier indication information may further indicate exchange of all control information corresponding to the first subcarrier and the second subcarrier, such as a modulation method, a TBS (Transport-block size information, transport block size information), and an RV (Redundancy and constellation version, redundancy and constellation version).

Optionally, when the base station determines that the carrier for sending the data information is the first carrier or the second carrier, the base station may execute the following two operation manners:
Manner 1: When determining that the carrier for sending the data information is the first carrier only, the base station determines that the carrier indication information is a third preset value.
Manner 2: When determining that the carrier for sending the data information is the second carrier only, the base station determines that the carrier indication information is a fourth preset value.

Exemplarily, the carrier includes a first subcarrier and a second subcarrier, the first subcarrier may be a main carrier, the second subcarrier may be a secondary carrier, and the carrier indication information may include four values: 0, 1, 2, and 3. When it is determined that a subcarrier on which the data information corresponding to the control message is located is a main carrier, it is determined that the carrier indication information is 0; when it is determined that the subcarrier on which the data information corresponding to the control message is located is a secondary carrier, it is determined that the carrier indication information is 1; when it is determined that the subcarrier on which the data information corresponding to the control message is located is a main carrier and a secondary carrier, it is determined that the carrier indication information is 2; and when it is determined that the subcarrier on which the data information corresponding to the control message is located is a main carrier and a secondary carrier, and exchange of modulation methods of the main carrier and the secondary carrier is determined, it is determined that the carrier indication information is 3.

By using the foregoing method executed by user equipment, after a base station sends a control message corresponding to data information to the user equipment by using a carrier, the user equipment acquires the control message by using the carrier, acquires carrier indication information according to the control message, and when determining, according to the carrier indication information, that the data information is carried on two subcarriers, performs data processing on the two subcarriers according to the control message, to acquire the data information. In this way, the control message corresponds to the two subcarriers, and the user equipment may determine, according to the control message sent by the base station, the data information corresponding to the control message, and may control data transmission on the two subcarriers according to one control message, thereby improving utilization efficiency of the control message.

An embodiment of the present invention provides a base station 70. As shown in FIG. 7, the base station 70 includes:
a processor (processor) 71, a communications interface (Communications Interface) 72, a memory (memory) 73, and a communications bus 74, where mutual communication between the processor 71, the communications interface 72, and the memory 73 is completed by using the communications bus 74.

The processor 71 may be a central processing unit CPU or an application-specific integrated circuit ASIC (Application Specific Integrated Circuit), or is configured as one or more integrated circuits that implement the embodiments of the present invention.

The memory 73 is configured to store program code, where the program code includes a computer operation instruction. The memory 73 may include a high-speed RAM memory, and may further include a non-volatile memory (non-volatile memory), such as at least one magnetic disk memory.

The communications interface 72 is configured to implement connection communication between these apparatuses.

The processor 71 executes the program code, and is configured to determine a carrier for sending data information, determine carrier indication information, and send a control message corresponding to the data information to the user equipment according to the carrier indication information, so that the user equipment receives the data information according to the control message.

The carrier includes two subcarriers, the carrier for sending the data information includes either of the two subcarriers, or includes the two subcarriers, and the carrier indication information indicates a subcarrier on which the data information corresponding to the control message is located.

Optionally, the control message includes the carrier indication information.

The processor 71 is further configured to send the control message that includes the carrier indication information to the user equipment.

Optionally, the control message includes a modulation method and a quantity of transport blocks.

The processor 71 is further configured to determine the modulation method and the quantity of transport blocks according to the carrier indication information, and send the control message that includes the modulation method and the quantity of transport blocks to the user equipment.

Optionally, the processor 71 is further configured to determine, according to the carrier indication information, a code channel number for sending the control message, and send the control message to the user equipment by using the code channel number.

Optionally, the processor 71 is further configured to determine a data channel code set in the control message according to the carrier indication information, and send, by using the code channel number, the control message that includes the data channel code set to the user equipment.

Optionally, the processor 71 is further configured to acquire identity information of the user equipment, determine a mask according to the identity information of the user equipment and the carrier indication information, mask the control message by using the mask, and send the control message masked by using the mask to the user equipment.

Optionally, the two subcarriers include a first subcarrier and a second subcarrier, and the processor 71 is further configured to: when it is determined that the carrier for sending the data information is the first carrier and the second carrier, determine that the carrier indication information is a first preset value.

Optionally, the control message includes a first processing manner and a second processing manner, and the processor 71 is further configured to: when it is determined that a processing manner corresponding to the first carrier is the first processing manner and a processing manner corresponding to the second carrier is the second processing manner, determine that the carrier indication information is the first preset value.

Optionally, the processor 71 is further configured to: when it is determined that the processing manner corresponding to the first carrier is the second processing manner and the processing manner corresponding to the second carrier is the first processing manner, determine that the carrier indication information is a second preset value.

Optionally, the first preset value is 2, and the second preset value is 3.

A person skilled in the art may clearly understand that, for ease and simplicity of descriptions, for a specific working process and descriptions of the base station 70 described above, refer to the corresponding process in the foregoing method embodiments, and details are not described herein again.

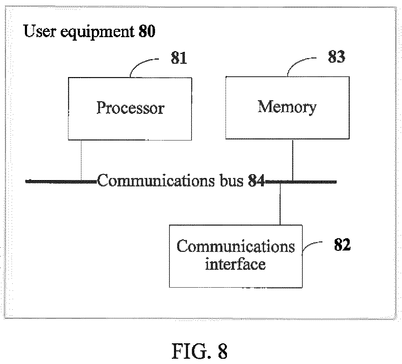

An embodiment of the present invention provides user equipment 80. As shown in FIG. 8, the user equipment 80 includes:
a processor (processor) 81, a communications interface (Communications Interface) 82, a memory (memory) 83, and a communications bus 84, where mutual communication between the processor 81, the communications interface 82, and the memory 83 is completed by using the communications bus 84.

The processor 81 may be a central processing unit CPU or an application-specific integrated circuit ASIC (Application Specific Integrated Circuit), or is configured as one or more integrated circuits that implement the embodiments of the present invention.

The memory 83 is configured to store program code, where the program code includes a computer operation instruction. The memory 83 may include a high-speed RAM memory, and may further include a non-volatile memory (non-volatile memory), such as at least one magnetic disk memory.

The communication interface 82 is configured to implement connection communication between these apparatuses.

The processor 81 executes the program code, and is configured to: after a base station sends a control message corresponding to data information to the user equipment according to carrier indication information, acquire the control message, acquire the carrier indication information according to the control message, and when it is determined, according to the carrier indication information, that the data information is carried on the two subcarriers, perform data processing on the two subcarriers according to the control message, to acquire the data information.

The data information is transmitted by using a carrier, where the carrier includes two subcarriers, and the carrier for sending data information includes either of the two subcarriers, or includes the two subcarriers.

Optionally, the control message includes the carrier indication information.

The processor 81 is further configured to acquire the carrier indication information in the control message.

Optionally, the control message includes a modulation method and a quantity of transport blocks.

The processor 81 is further configured to acquire the modulation method and the quantity of transport blocks according to the control message, and determine the carrier indication information according to the modulation method and the quantity of transport blocks.

Optionally, the processor 81 is further configured to determine a code channel number corresponding to the received control message, and determine the carrier indication information according to the code channel number.

Optionally, the processor 81 is further configured to determine a data channel code set according to the control message, and determine the carrier indication information according to the code channel number and the data channel code set.

Optionally, the processor 81 is further configured to acquire identity information of the user equipment, determine preset carrier indication information, obtain a mask according to the identity information and the preset carrier indication information, detect the control message on the carrier by using the mask, determine that a first mask of the control message is detected on the carrier, determine first preset carrier indication information corresponding to the first mask, and determine that the first preset carrier indication information is the carrier indication information.

Optionally, the two subcarriers include a first subcarrier and a second subcarrier.

The processor 81 is further configured to: when it is determined that the carrier indication information is a first preset value, determine that the data information is carried on the first subcarrier and the second subcarrier, and perform data processing on the first subcarrier and the second subcarrier according to the control message.

Optionally, the control message includes a first processing manner and a second processing manner.

The processor 81 is further configured to determine the first processing manner according to the control message, and perform data processing on the first subcarrier according to the first processing manner; determine the second processing manner according to the control message, and perform data processing on the second subcarrier according to the second processing manner.

Optionally, the processor 81 is further configured to: when it is determined that the carrier indication information is a second preset value, determine that the data information is carried on the first subcarrier and the second subcarrier, perform data processing on the first carrier according to the second processing manner, and perform data processing on the second carrier according to the first processing manner.

Optionally, the first preset value is 2, and the second preset value is 3.

A person skilled in the art may clearly understand that, for ease and simplicity of descriptions, for a specific working process and descriptions of the user equipment 80 described above, refer to the corresponding process in the foregoing method embodiments, and details are not described herein again.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A base station, comprising:
a processing unit, configured to determine a carrier for sending data information, determine carrier indication information, and determine, according to the carrier indication information, a control message corresponding to the data information, wherein the carrier comprises two subcarriers, and the carrier indication information indicates that the data information corresponding to the control message is sent on the two subcarriers; and
a sending unit, configured to send the control message determined by the processing unit to user equipment, so that the user equipment receives the data information according to the control message.

2. The base station according to claim 1, wherein the control message comprises the carrier indication information; and
the sending unit is further configured to send the control message that comprises the carrier indication information to the user equipment.

3. The base station according to claim 1, wherein the control message comprises a modulation method and a quantity of transport blocks;
the processing unit is further configured to determine the modulation method and the quantity of transport blocks according to the carrier indication information; and
the sending unit is specifically configured to send the control message that comprises the modulation method and the quantity of transport blocks to the user equipment.

4. The base station according to claim 1, wherein the processing unit is further configured to determine, according to the carrier indication information, a code channel number for sending the control message; and
the sending unit is specifically configured to send the control message to the user equipment by using the code channel number.

5. The base station according to claim 4, wherein the processing unit is further configured to determine a data channel code set in the control message according to the carrier indication information; and
the sending unit is further configured to send, by using the code channel number, the control message that comprises the data channel code set to the user equipment.

6. The base station according to claim 1, wherein the base station further comprises: an acquiring unit, configured to acquire identity information of the user equipment;
the processing unit is further configured to determine a mask according to the identity information of the user equipment obtained by the acquiring unit and the carrier indication information, and mask the control message by using the mask; and
the sending unit is specifically configured to send the control message masked by using the mask to the user equipment.

7. The base station according to any one of claims 1 to 6, wherein the two subcarrier comprise a first subcarrier and a second subcarrier; and
the processing unit is specifically configured to: when it is determined that the carrier for sending the data information is the first carrier and the second carrier, determine that the carrier indication information is a first preset value.

8. The base station according to claim 7, wherein the control message comprises a first processing manner and a second processing manner; and
the processing unit is specifically configured to: when it is determined that a processing manner corresponding to the first carrier is the first processing manner and a processing manner corresponding to the second carrier is the second processing manner, determine that the carrier indication information is the first preset value.

9. The base station according to claim 8, wherein the processing unit is further configured to: when it is determined that the processing manner corresponding to the first carrier is the second processing manner and the processing manner corresponding to the second carrier is the first processing manner, determine that the carrier indication information is a second preset value.

10. The base station according to claim 9, wherein the first preset value is 2, and the second preset value is 3.

11. User equipment, comprising:
a receiving unit, configured to: after a base station sends, according to carrier indication information, a control message corresponding to data information to the user equipment, acquire the control message, wherein the data information is transmitted by using two subcarriers; and
a processing unit, configured to acquire the carrier indication information according to the control message received by the receiving unit, and when it is determined, according to the carrier indication information, that the data information is carried on the two subcarriers, perform data processing on the two subcarriers according to the control message, to acquire the data information, wherein the carrier indication information indicates a subcarrier on which the data information corresponding to the control message is located.

12. The user equipment according to claim 11, wherein the control message comprises the carrier indication information; and
the processing unit is specifically configured to acquire the carrier indication information in the control message.

13. The user equipment according to claim 11, wherein the control message comprises a modulation method and a quantity of transport blocks; and
the processing unit is specifically configured to acquire the modulation method and the quantity of transport blocks according to the control message, and determine the carrier indication information according to the modulation method and the quantity of transport blocks.

14. The user equipment according to claim 11, wherein the processing unit is specifically configured to determine a code channel number corresponding to the control message received by the receiving unit, and determine the carrier indication information according to the code channel number.

15. The user equipment according to claim 14, wherein the processing unit is further configured to: before the carrier indication information is determined according to the code channel number, determine a data channel code set according to the control message, and determine the carrier indication information according to the code channel number and the data channel code set.

16. The user equipment according to claim 11, wherein the user equipment further comprises: an acquiring unit, configured to: before the control message is acquired according to the carrier, acquire identity information of the user equipment;
the processing unit is further configured to determine preset carrier indication information, and obtain a mask according to the identity information obtained by the acquiring unit and the preset carrier indication information;
the acquiring unit is further configured to detect the control message on the carrier by using the mask obtained by the processing unit; and
the processing unit is further configured to determine that a first mask of the control message is detected on the carrier, determine first preset carrier indication information corresponding to the first mask, and determine that the first preset carrier indication information is the carrier indication information.

17. The user equipment according to any one of claims 11 to 16, wherein the two subcarriers comprise a first subcarrier and a second subcarrier; and
the processing unit is further configured to: when it is determined that the carrier indication information is a first preset value, determine that the data information is carried on the first subcarrier and the second subcarrier, and perform data processing on the first subcarrier and the second subcarrier according to the control message.

18. The user equipment according to claim 17, wherein the control message comprises a first processing manner and a second processing manner; and
the processing unit is specifically configured to determine the first processing manner according to the control message, and perform data processing on the first subcarrier according to the first processing manner; determine the second processing manner according to the control message, and perform data processing on the second subcarrier according to the second processing manner.

19. The user equipment according to claim 18, wherein the processing unit is further configured to: when it is determined that the carrier indication information is a second preset value, determine that the data information is carried on the first subcarrier and the second subcarrier, perform data processing on the first carrier according to the second processing manner, and perform data processing on the second carrier according to the first processing manner.

20. The user equipment according to claim 19, wherein the first preset value is 2, and the second preset value is 3.

21. A method for transmitting data information, comprising:
determining, by a base station, a carrier for sending data information, and determining carrier indication information, wherein the carrier comprises two subcarriers, and the carrier indication information indicates that the data information corresponding to a control message is sent on the two subcarriers; and
sending the control message corresponding to the data information to the user equipment according to the carrier indication information, so that the user equipment receives the data information according to the control message.

22. The method according to claim 21, wherein the control message comprises the carrier indication information; and
the sending the control message corresponding to the data information to the user equipment according to the carrier indication information comprises:
sending the control message that comprises the carrier indication information to the user equipment.

23. The method according to claim 21, wherein the control message comprises a modulation method and a quantity of transport blocks;
before the sending the control message corresponding to the data information to the user equipment according to the carrier indication information, the method further comprises:
determining the modulation method and the quantity of transport blocks according to the carrier indication information; and
the sending the control message corresponding to the data information to the user equipment according to the carrier indication information comprises:
sending the control message that comprises the modulation method and the quantity of transport blocks to the user equipment.

24. The method according to claim 21, wherein before the sending the control message corresponding to the data information to the user equipment according to the carrier indication information, the method further comprises:
determining, according to the carrier indication information, a code channel number for sending the control message; and
the sending the control message corresponding to the data information to the user equipment according to the carrier indication information comprises:
sending the control message to the user equipment by using the code channel number.

25. The method according to claim 24, wherein before the sending the control message corresponding to the data information to the user equipment according to the carrier indication information, the method further comprises:
determining a data channel code set in the control message according to the carrier indication information; and
the sending the control message to the user equipment by using the code channel number comprises:
sending, by using the code channel number, the control message that comprises the data channel code set to the user equipment.

26. The method according to claim 21, wherein before the sending the control message corresponding to the data information to the user equipment, the method further comprises:
acquiring identity information of the user equipment, determining a mask according to the identity information of the user equipment and the carrier indication information, and masking the control message by using the mask; and
the sending the control message corresponding to the data information to the user equipment according to the carrier indication information comprises:
sending the control message masked by using the mask to the user equipment.

27. The method according to any one of claims 21 to 26, wherein the two subcarriers comprise a first subcarrier and a second subcarrier; and
the determining carrier indication information comprises:
determining that the carrier indication information is a first preset value when it is determined that the carrier for sending the data information is the first carrier and the second carrier.

28. The method according to claim 27, wherein the control message comprises a first processing manner and a second processing manner; and
the determining that the carrier indication information is a first preset value when it is determined that the carrier for sending the data information is the first carrier and the second carrier comprises:
when it is determined that a processing manner corresponding to the first carrier is the first processing manner and a processing manner corresponding to the second carrier is the second processing manner, determining that the carrier indication information is the first preset value.

29. The method according to claim 28, wherein the determining carrier indication information comprises:
when it is determined that the processing manner corresponding to the first carrier is the second processing manner and the processing manner corresponding to the second carrier is the first processing manner, determining that the carrier indication information is a second preset value.

30. The method according to claim 29, wherein the first preset value is 2, and the second preset value is 3.

31. A method for transmitting data information, comprising:
after a base station sends a control message corresponding to data information to user equipment according to carrier indication information, acquiring, by the user equipment, the control message, wherein the data information is transmitted by using two subcarriers;
acquiring the carrier indication information according to the control message, wherein the carrier indication information indicates a subcarrier on which the data information corresponding to the control message is located; and
performing data processing on the two subcarriers according to the control message, to acquire the data information when it is determined, according to the carrier indication information, that the data information is carried on the two subcarriers.

32. The method according to claim 31, wherein the control message comprises the carrier indication information; and
the acquiring the carrier indication information according to the control message comprises:
acquiring the carrier indication information in the control message.

33. The method according to claim 31, wherein the control message comprises a modulation method and a quantity of transport blocks; and
the acquiring the carrier indication information according to the control information comprises:
acquiring the modulation method and the quantity of transport blocks according to the control message, and determining the carrier indication information according to the modulation method and the quantity of transport blocks.

34. The method according to claim 31, wherein the acquiring the carrier indication information according to the control information comprises:
determining a code channel number corresponding to the received control message, and determining the carrier indication information according to the code channel number.

35. The method according to claim 34, wherein before the determining the carrier indication information according to the code channel number, the method further comprises:
determining a data channel code set according to the control message; and
the determining the carrier indication information according to the code channel number comprises:
determining the carrier indication information according to the code channel number and the data channel code set.

36. The method according to claim 31, wherein before the acquiring a control message according to the carrier, the method further comprises:
acquiring identity information of the user equipment, determining preset carrier indication information, obtaining a mask according to the identity information and the preset carrier indication information, and detecting the control message on the carrier by using the mask; and
the acquiring the carrier indication information according to the control information comprises:
determining that a first mask of the control message is detected on the carrier, determining first preset carrier indication information corresponding to the first mask, and determining that the first preset carrier indication information is the carrier indication information.

37. The method according to any one of claims 31 to 36, wherein the two subcarriers comprise a first subcarrier and a second subcarrier; and
the performing data processing on the two subcarriers according to the control message when it is determined, according to the carrier indication information, that the data information is carried on the two subcarriers comprises:
when it is determined that the carrier indication information is a first preset value, determining that the data information is carried on the first subcarrier and the second subcarrier, and performing data processing on the first subcarrier and the second subcarrier according to the control message.

38. The method according to claim 37, wherein the control message comprises a first processing manner and a second processing manner; and
the performing data processing on the first subcarrier and the second subcarrier according to the control message comprises:
determining the first processing manner according to the control message, and performing data processing on the first subcarrier according to the first processing manner; and
determining the second processing manner according to the control message, and performing data processing on the second subcarrier according to the second processing manner.

39. The method according to claim 38, wherein the performing data processing on the two subcarriers according to the control message when it is determined, according to the carrier indication information, that the data information is carried on the two subcarriers comprises:
when it is determined that the carrier indication information is a second preset value, determining that the data information is carried on the first subcarrier and the second subcarrier, performing data processing on the first carrier according to the second processing manner, and performing data processing on the second carrier according to the first processing manner.

40. The method according to claim 39, wherein the first preset value is 2, and the second preset value is 3.

41. A base station, comprising: a processor and a memory, wherein the memory stores a computer execution instruction, and the processor and the memory are connected by using a communications bus; and
when the base station runs, the processor executes the computer execution instruction stored in the memory, so that the base station executes the method according to any one of claims 21 to 30.

42. User equipment, comprising: a processor and a memory, wherein the memory stores a computer execution instruction, and the processor and the memory are connected by using a communications bus; and
when the user equipment runs, the processor executes the computer execution instruction stored in the memory, so that the user equipment executes the method according to any one of claims 31 to 40.
